# EUROPÄISCHE PATENTSCHRIFT

(11) **EP 3 679 562 B1**
(45) Veröffentlichungstag und Bekanntmachung des Hinweises auf die Patenterteilung: **21.10.2020**
(21) Anmeldenummer: 18759920.4
(22) Anmeldetag: 22.08.2018
(51) Int. Cl.: G08G 1/14, B62D 15/02, G07B 15/02

(54) **VERFAHREN ZUR AUTHENTIFIZIERUNG EINES KRAFTFAHRZEUGS**
METHOD FOR AUTHENTICATING A MOTOR VEHICLE
PROCÉDÉ PERMETTANT D'AUTHENTIFIER UN VÉHICULE AUTOMOBILE

(30) Priorität: 12.12.2017 DE 102017222434
(43) Veröffentlichungstag der Anmeldung: 15.07.2020
(73) Patentinhaber: Audi AG, 85045 Ingolstadt (DE)
(72) Erfinder: SCHULLER, Florian, 85737 Ismaning (DE); FEIST, Christian, 85049 Ingolstadt (DE)
(86) Internationale Anmeldenummer: PCT/EP2018/072634
(87) Internationale Veröffentlichungsnummer: WO 2019/115023

(56) Entgegenhaltungen:
- CN-A- 106 330 445
- DE-A1-102014 224 073
- DE-A1-102016 100 730

## Beschreibung

Die Erfindung betrifft ein Verfahren zur Authentifizierung eines Kraftfahrzeugs zum Durchführen zumindest eines Vorgangs durch das Kraftfahrzeug, wobei sich der zumindest eine Vorgang auf einen durch das Kraftfahrzeug befahrbaren vorbestimmten Bereich bezieht. Bei dem Verfahren nähert sich das Kraftfahrzeug zunächst dem vorbestimmten Bereich, wie beispielsweise einem Parkhaus, zum Durchführen des zumindest einen Vorgangs innerhalb des vorbestimmten Bereichs. In einem weiteren Verfahrensschritt wird der vorbestimmte Bereich mittels einer Erfassungseinrichtung des Kraftfahrzeugs erfasst und dadurch identifiziert.

Aus dem allgemeinen Stand der Technik ist es bekannt, dass sich Kraftfahrzeuge autonom innerhalb eines Parkhauses oder auf einem Parkplatz, beispielsweise für einen Ein- oder Ausparkvorgang, also einen Vorgang, welcher sich auf das Parkhaus oder den Parkplatz bezieht, bewegen.

So beschreibt beispielsweise die DE 10 2014 224 073 A1 einen Server zum Betreiben eines Parkplatzes. Der Server umfasst eine Datenbank, in welcher eine digitale Karte des Parkplatzes gespeichert ist. Ferner weist der Server einen Prozessor auf, der ausgebildet ist, zumindest eine Zielposition für ein Fahrzeug auf dem Parkplatz und zumindest einen Ausschnitt aus der digitalen Karte zu ermitteln, der einem Teilbereich des Parkplatzes entspricht, welcher von dem Fahrzeug auf seiner Fahrt zur Zielposition autonom durchfahren werden soll. Schließlich umfasst der Server eine Kommunikationsschnittstelle, die ausgebildet ist, den Ausschnitt der digitalen Karte und die Zielposition über ein Kommunikationsnetzwerk an das Fahrzeug zu senden. Auch aus der DE 10 2016 001 264 A1 geht ein Verfahren zum autonomen Fahren eines Fahrzeugs in einem begrenzten Gebiet hervor. Hierbei wird ein fahrzeugeigenes, zum autonomen Fahren genutztes Steuergerät über eine Fahrzeugschnittstelle von einer externen Steuereinrichtung gesteuert. Bei dem Verfahren überprüft das fahrzeugeigene, zum autonomen Fahren genutzte Steuergerät, ob sich das Fahrzeug in einem von einer als lokale Infrastruktureinheit ausgebildeten externen Steuereinrichtung vorgegebenen begrenzten Gebiet befindet. Zudem wird durch das fahrzeugeigene, zum autonomen Fahren genutzte Steuergerät nach Feststellung einer Position des Fahrzeugs in dem vorgegebenen begrenzten Gebiet über eine Fernsteuerung-Schnittstelle des Fahrzeugs eine drahtlose Verbindung zur lokalen Infrastruktureinheit zur Steuerung des autonomen Fahrvorganges hergestellt, wobei die lokale Infrastruktureinheit das Fahrzeug fernsteuert.

Ferner ist auch in der DE 10 2016 100 730 A1 ein Verfahren zum Unterstützen einer autonomen Fahrt eines Kraftfahrzeugs auf einer Parkfläche beschrieben. Bei dem Verfahren wird eine die Parkfläche in einem Parkflächen-Bezugssystem beschreibende Infrastrukturkarte bereitgestellt, wobei eine Bezugsposition auf der Parkfläche als Bezugspunkt für das Parkflächen-Bezugssystem vorgegeben ist und wobei in der Infrastrukturkarte zumindest eine Fahrtrajektorie für die autonome Fahrt des Kraftfahrzeugs bezogen auf den Bezugspunkt vorgegeben ist. In einem weiteren Verfahrensschritt wird zumindest ein Kommunikationselement an der Bezugsposition auf der Parkfläche zum Kommunizieren mit einem Parkassistenzsystem des Kraftfahrzeugs bereitgestellt. Des Weiteren wird eine Position des Kraftfahrzeugs relativ zu dem Kommunikationselement durch das zumindest eine Kommunikationselement erfasst und die erfasste Position des Kraftfahrzeugs als Bezugspunkt für ein Kraftfahrzeug-Bezugssystem festgelegt. Schließlich wird die zumindest eine in dem Parkflächen-Bezugssystem vorgegebene Fahrtrajektorie in das Kraftfahrzeug-Bezugssystem transformiert. Aus der CN 106 330 445 A ist ein Verfahren zur Authentifizierung eines Kraftfahrzeugs offenbart, welches den Merkmalen des Oberbegriffs von Anspruch 1 entspricht.

Derartige Server oder Verfahren haben den Nachteil, dass sie besonders aufwendig und komplex zu betreiben sind. Neben dem komplexen Aufbau und der aufwendigen Betriebsweise derartiger Systeme, welche ein Kraftfahrzeug in einem Parkhaus autonom steuern, zeigt keines der Systeme eine Möglichkeit einer Authentifizierung des Kraftfahrzeugs zum Durchführen des zumindest einen Vorgangs des Kraftfahrzeugs auf.

Aufgabe der vorliegenden Erfindung ist es daher, ein Verfahren zur Authentifizierung eines Kraftfahrzeugs bereitzustellen, womit eine Authentifizierung des Kraftfahrzeugs besonders einfach und zuverlässig möglich ist.

Diese Aufgabe wird durch ein Verfahren zur Authentifizierung eines Kraftfahrzeugs mit den Merkmalen des Patentanspruchs 1 gelöst. Vorteilhafte Ausgestaltungen mit zweckmäßigen und nicht trivialen Weiterbildungen der Erfindung sind in den abhängigen Patentansprüchen angegeben.

Bei dem Verfahren zur Authentifizierung eines Kraftfahrzeugs zum Durchführen zumindest eines Vorgangs durch das Kraftfahrzeug nähert sich das Kraftfahrzeug einem vorbestimmten Bereich zum Durchführen des zumindest einen Vorgangs innerhalb des vorbestimmten Bereichs an. Dabei bezieht sich der zumindest eine Vorgang auf den durch das Kraftfahrzeug befahrbaren vorbestimmten Bereich. Mit anderen Worten wird innerhalb des vorbestimmten Bereichs zumindest ein Vorgang des Kraftfahrzeugs durch das Kraftfahrzeug ausgeführt. Mit "Authentifizierung" ist insbesondere ein Autorisierungsvorgang, also eine Autorisierung des Kraftfahrzeugs, oder ein Registriervorgang, also eine Registrierung des Kraftfahrzeugs, gemeint. Mit anderen Worten erfolgt eine Überprüfung, ob das Kraftfahrzeug zum Durchführen des zumindest einen Vorgangs berechtigt ist. Bei dem vorbestimmten Bereich kann es sich beispielsweise um ein Parkhaus oder einen Parkplatz handeln. Zum Beispiel kann sich das Kraftfahrzeug einem Parkhaus nähern oder auf das Parkhaus zufahren, in dem der zumindest eine Vorgang durch das Kraftfahrzeug durchgeführt werden soll.

Bei dem zumindest einen Vorgang handelt es sich insbesondere um einen Fahrvorgang des Kraftfahrzeugs. Beim Durchführen des zumindest einen Vorgangs wird das Kraftfahrzeug bevorzugt in einem autonomen oder vollautomatisierten Fahrbetrieb betrieben. Mit autonomen Fahrbetrieb ist hier bevorzugt gemeint, dass sich das Kraftfahrzeug selbstständig bewegt. Im autonomen Fahrbetrieb kann es vorgesehen sein, dass sich keiner im Kraftfahrzeug oder kein aktiver Fahrzeugführer oder nur Passagiere im Kraftfahrzeug befinden. Beispielsweise ist das Kraftfahrzeug dazu eingerichtet, im autonomen Fahrbetrieb autonom von einer Abgabestelle zu einer vorbestimmten Position zu fahren. Beispielsweise kann das Kraftfahrzeug autonom auf einem Parkplatz von der Abgabestelle zu einer Parkposition fahren, insbesondere dort einparken. Zusätzlich oder alternativ kann es vorgesehen sein, dass das Kraftfahrzeug dazu eingerichtet ist, von der vorbestimmten Position zurück zu der Abgabestelle zu fahren. Bei der "Abgabestelle" handelt es sich bevorzugt um eine Position, an der ein Fahrer des Kraftfahrzeugs das Kraftfahrzeug abgestellt hat oder aus dem Kraftfahrzeug ausgestiegen ist. Im autonomen Fahrbetrieb muss sich der Fahrer des Kraftfahrzeugs also nicht weiter um den weiteren Betrieb des Kraftfahrzeugs kümmern.

Besonders bevorzugt kann das Kraftfahrzeug zum Durchführen des zumindest einen Vorgangs durch eine Steuereinrichtung, welche dem vorbestimmten Bereich zugeordnet ist, gesteuert werden. Mit anderen Worten kann das Kraftfahrzeug durch die Steuereinrichtung ferngesteuert werden. Die Steuereinrichtung kann dazu eingerichtet sein, Vorgänge innerhalb des vorbestimmten Bereichs unteranderem auch den zumindest einen Vorgang des Kraftfahrzeugs zu koordinieren.

In einem weiteren Verfahrensschritt erfasst eine Erfassungseinrichtung des Kraftfahrzeugs den vorbestimmten Bereich, wodurch der vorbestimmte Bereich identifiziert wird. Mit anderen Worten kann durch die Erfassungseinrichtung bei der Annäherung an den vorbestimmten Bereich der vorbestimmte Bereich erkannt werden. Mit anderen Worten detektiert bei einer Annäherung das Kraftfahrzeug durch die Erfassungseinrichtung das wahrgenommene Umfeld. Der vorbestimmte Bereich kann, insbesondere anhand oder auf Basis des durch die Erfassungseinrichtung erfassten vorbestimmten Bereichs, durch eine Steuereinrichtung, insbesondere des Kraftfahrzeugs, identifiziert oder erkannt werden.

In einem darauffolgenden Verfahrensschritt wird eine Identifikationsmeldung des erfassten vorbestimmten Bereichs von dem Kraftfahrzeug an eine Servereinrichtung ausgegeben. Zum Ausgeben der Identifikationsmeldung kann das Kraftfahrzeug eine Kommunikationseinrichtung aufweisen. Die Identifikationsmeldung kann über eine Verbindung zu der weiteren Servereinrichtung, insbesondere über eine Funkverbindung, wie beispielsweise eine Mobilfunkverbindung, insbesondere GPRS oder LTE, ausgegeben werden. Besonders bevorzugt handelt es sich bei der Servereinrichtung um eine Servereinrichtung des Fahrzeugherstellers des Kraftfahrzeugs. Die Identifikationsmeldung kann beispielsweise Daten oder Informationen umfassen, welche den vorbestimmten Bereich identifizieren oder beschreiben.

Auf die Identifikationsmeldung hin wird durch die Servereinrichtung eine Anfragemeldung zur Authentifizierung des Kraftfahrzeugs an eine dem vorbestimmten Bereich zugeordnete weitere Servereinrichtung ausgegeben oder ausgesendet. Beispielsweise kann es sich bei der dem vorbestimmten Bereich zugeordneten weiteren Servereinrichtung um eine lokale Servereinrichtung des vorbestimmten Bereichs handeln. Beispielsweise kann die Anfragemeldung über eine Verbindung zu der weiteren Servereinrichtung, insbesondere über eine Funkverbindung, wie beispielsweise eine Mobilfunkverbindung oder eine WLAN-Verbindung, ausgegeben werden.

Schließlich überprüft die weitere Servereinrichtung bei Empfangen der Anfragemeldung zumindest ein Authentifizierungskriterium. Bei Erfüllung des zumindest einen Authentifizierungskriteriums wird das Kraftfahrzeug zum Durchführen des zumindest einen Vorgangs authentifiziert.

Durch das Verfahren zur Authentifizierung des Kraftfahrzeugs wird das Kraftfahrzeug nur unter einem konkreten Authentifizierungskriterium berechtigt. Bei dem Authentifizierungsverfahren erfolgt ein Zusammenspiel des Kraftfahrzeugs mit einer Servereinrichtung als Zwischenglied und der lokalen Servereinrichtung. Eine Authentifizierung ist nur möglich, wenn das konkrete Authentifizierungskriterium erfüllt ist. Durch die einzelnen Abfragestufen kann ein Missbrauch bei der Durchführung des zumindest einen Vorgangs des Kraftfahrzeugs vermieden werden. Dadurch kann das Verfahren zur Authentifizierung des Kraftfahrzeugs besonders zuverlässig und sicher ausgestaltet werden.

Eine vorteilhafte Ausführungsform sieht vor, dass beim Erfassen des vorbestimmten Bereichs zumindest ein Merkmal des vorbestimmten Bereichs durch die Erfassungseinrichtung erfasst wird. Beispielsweise kann die Erfassungseinrichtung dazu eingerichtet sein, ein Merkmal des vorbestimmten Bereichs, insbesondere ein lokales Merkmal, wie beispielsweise eine Landmarke des vorbestimmten Bereichs, zu erfassen. Mit "Landmarke" ist insbesondere ein topographisches Objekt gemeint. Landmarken spielen insbesondere bei der räumlichen Orientierung eine wichtige Rolle. Beispielsweise kann die Erfassungseinrichtung des Kraftfahrzeugs hierzu eine Kamera und/oder einen Sensor, wie beispielsweise ein Ultraschallsensor, aufweisen. Mit anderen Worten kann das Kraftfahrzeug durch die Fahrzeugsensorik lokale Merkmale des vorbestimmten Bereichs erkennen. Dadurch ergibt sich der Vorteil, dass besonders einfache und zuverlässige Art und Weise der vorbestimmte Bereich durch das Kraftfahrzeug erfasst werden kann.

Zusätzlich oder alternativ wird beim Erfassen des vorbestimmten Bereichs eine Funkverbindung zu der weiteren Servereinrichtung erfasst. Mit anderen Worten kann ein lokaler Funkkanal, insbesondere eine lokale Funkverbindung, insbesondere ein lokales Netzwerk, durch das Kraftfahrzeug, insbesondere die Erfassungseinrichtung des Kraftfahrzeugs, erkannt oder erfasst werden. In vorteilhafter Weise kann zur Durchführung des zumindest einen Vorgangs des Kraftfahrzeugs, insbesondere für einen autonomen oder automatischen Fahrvorgang, der vorbestimmte Bereich eine Kommunikationseinheit für eine lokale Verbindung, insbesondere Funkverbindung, und/oder eine Internetverbindung aufweisen.

Zum Beispiel kann es vorgesehen sein, dass das Kraftfahrzeug, das in der Infrastruktur - dem vorbestimmten Bereich - automatische Fahrvorgänge durchführen möchte, bei der Annäherung eine lokale Funkverbindung und sein durch onboard Sensorik - die Erfassungseinrichtung - wahrgenommenes Umfeld detektiert. Dadurch kann das Kraftfahrzeug besonders einfach sein Umfeld identifizieren und weitere Schritte für den zumindest einen durchzuführenden Vorgang einleiten.

In vorteilhafter Weise wird beim Identifizieren des vorbestimmten Bereichs dem vorbestimmten Bereich eine digitale Karte des vorbestimmten Bereichs anhand des erfassten zumindest einen Merkmals und/oder der erfassten Funkverbindung zugeordnet. Mit anderen Worten kann ein Bezug zwischen der Detektion des zumindest einen Merkmals und/oder der Funkverbindung aus einer Karte, welche sich auf den vorbestimmten Bereich bezieht, insbesondere einer a-priori Karte, hergestellt werden. Mit anderen Worten kann durch einen Abgleich der detektieren Informationen, wie beispielsweise dem Namen der Funkverbindung und/oder der identifizierten Landmarken, mit der digitalen Karte fahrzeugseitig die Zielinfrastruktur - der vorbestimmte Bereich - identifiziert werden. Durch die erfassten Merkmale und/oder die Funkverbindung kann auf besonders einfache und zuverlässige Art und Weise eine Karteninformation des vorbestimmten Bereichs bereitgestellt werden.

Zusätzlich oder alternativ kann es vorgesehen sein, dass sobald die digitale Karte dem vorbestimmten Bereich zugeordnet ist, weitere Detailinformationen zum Nachladen von detaillierten Kartenmaterial zu dem vorbestimmten Bereich angefragt werden. Beispielsweise kann die Servereinrichtung dazu eingerichtet sein, weiteres Kartenmaterial oder weitere Daten, welche den vorbestimmten Bereich betreffen, an das Kraftfahrzeug zu übermitteln.

Gemäß einer vorteilhaften Weiterbildung ist es vorgesehen, dass die Identifikationsmeldung Kartendaten der digitalen Karte und/oder das zumindest eine Merkmal des vorbestimmten Bereichs umfasst. Mit anderen Worten kann das Kraftfahrzeug mit der Identifikationsmeldung, beispielsweise über eine Mobilfunkschnittstelle, Daten zur Zielinfrastruktur an die Servereinrichtung übermitteln. Mit anderen Worten kann das Kraftfahrzeug die Identifikation der aktiven Infrastruktur, also dem vorbestimmten Bereich in dem der zumindest eine Vorgang aktiv durchgeführt werden soll, an die Servereinrichtung melden. Zusätzlich oder alternativ kann die Identifikationsmeldung Daten der erfassten Funkverbindung, wie beispielsweise den Namen der Funkverbindung, umfassen.

In vorteilhafter Weise wird vor dem Ausgeben der Anfragemeldung ein Möglichkeitskriterium zum Durchführen des zumindest einen Vorgangs durch das Kraftfahrzeug durch die Servereinrichtung geprüft. Mit anderen Worten kann die weitere Servereinrichtung auf Basis der empfangenen Identifikationsmeldung das Kraftfahrzeug oder Daten des Kraftfahrzeugs prüfen.

Eine vorteilhafte Ausführungsform sieht vor, dass beim Prüfen des Möglichkeitskriteriums die Servereinrichtung überprüft, ob das Kraftfahrzeug dazu geeignet ist, in dem zumindest einem vorbestimmten Bereich den zumindest einen Vorgang durchzuführen und/oder eine Zugangsberechtigung zu dem vorbestimmten Bereich hat. Mit anderen Worten kann die Servereinrichtung eine Eignung und/oder eine Erlaubnis für den angeforderten Vorgang, beispielsweise dem automatisierten Fahrvorgang, überprüfen. Mit "Eignung" ist insbesondere gemeint, zu überprüfen, ob der vorbestimmte Bereich über technische Mittel zum Durchführen des zumindest einen Vorgangs, insbesondere zum Durchführen eines autonomen Fahrvorgangs, verfügt. Zusätzlich oder alternativ kann es vorgesehen sein, dass die Servereinrichtung eine Identität des Kraftfahrzeugs bei der Überprüfung des Möglichkeitskriteriums überprüft. Beispielsweise kann bei der Überprüfung der Identität die Servereinrichtung ein Identifikationsmerkmal, wie beispielsweise ein Kennzeichen des Kraftfahrzeugs und/oder eine Kennung des Kraftfahrzeugs, von dem Kraftfahrzeug abfragen. Zusätzlich oder alternativ kann die Servereinrichtung als Möglichkeitskriteriums überprüfen, ob der zumindest eine Vorgang in dem vorbestimmten Bereich, insbesondere zu dem jetzigen Zeitpunkt, möglich ist. Wird als der vorbestimmte Vorgang beispielsweise ein Parkvorgang angefragt und sind alle Parkplätze belegt, so kann der vorbestimmte Vorgang gar nicht durchgeführt werden.

Gemäß einer vorteilhaften Weiterbildung ist es vorgesehen, dass bei der Ausgabe der Anfragemeldung die Servereinrichtung Daten des Kraftfahrzeugs, insbesondere ein Identifikationsmerkmal und/oder ein Authentifizierungsmerkmal und/oder die durch die Erfassungseinrichtung des Kraftfahrzeugs erfassten Daten des vorbestimmten Bereichs, an die weitere Servereinrichtung übermittelt. Als Identifikationsmerkmal kann der weiteren Servereinrichtung beispielsweise das Kennzeichen des Kraftfahrzeugs übermittelt werden. Als Authentifizierungsmerkmal kann der weiteren Servereinrichtung beispielsweise eine Kennung des Kraftfahrzeugs, insbesondere zum Aufbau einer Verbindung, insbesondere einer Funkverbindung, zu dem Kraftfahrzeug, übermittelt werden.

In vorteilhafter Weise gleicht zur Überprüfung des Authentifizierungskriteriums die weitere Servereinrichtung die von der Servereinrichtung bereitgestellten Daten, welche ein Identifikationsmerkmal und/oder ein Authentifizierungsmerkmal und/oder die durch die Erfassungseinrichtung des Kraftfahrzeugs erfassten Daten des vorbestimmten Bereichs umfassen, mit dem der weiteren Servereinrichtung hinterlegten und/oder der weiteren Servereinrichtung durch eine Erfassungseinrichtung des vorbestimmten Bereichs erfassten Daten zur Identifikation des Kraftfahrzeugs, ab. Beispielsweise kann die weitere Servereinrichtung als Authentifizierungskriterium ein Kennzeichen des Kraftfahrzeugs überprüfen, indem durch die Erfassungseinrichtung des vorbestimmten Bereichs das Kennzeichen des Kraftfahrzeugs erfasst und an die weitere Servereinrichtung übertragen wird. Zudem wird als Identifikationsmerkmal das Kennzeichen des Kraftfahrzeugs durch die Servereinrichtung an die weitere Servereinrichtung übertragen. Stimmt das Kennzeichen des Kraftfahrzeugs mit dem durch die Erfassungseinrichtung des vorbestimmten Bereichs erfassten Kennzeichens überein, so ist das Authentifizierungskriterium erfüllt. Zusätzlich oder alternativ kann es vorgesehen sein, dass beispielsweise die Servereinrichtung ein durch die Erfassungseinrichtung des Kraftfahrzeugs erfasstes lokales Merkmal des vorbestimmten Bereichs an die Servereinrichtung übermittelt. Der weiteren Servereinrichtung können hierzu Merkmale des vorbestimmten Bereichs hinterlegt sein. Stimmt das durch die Erfassungseinrichtung des Kraftfahrzeugs erfasste lokale Merkmal mit einem der Servereinrichtung hinterlegten Merkmale überein, so kann das Authentifizierungskriterium erfüllt sein. Zusätzlich oder alternativ kann es beispielsweise vorgesehen sein, dass durch die weitere Servereinrichtung erfasst werden kann, dass das Kraftfahrzeug eine Verbindung zu der weiteren Servereinrichtung, insbesondere eine Funkverbindung zu der weiteren Servereinrichtung, aufnehmen möchte. Wird durch die Servereinrichtung, beispielsweise durch die Anfragemeldung bestätigt, dass das Kraftfahrzeug zu der weiteren Servereinrichtung eine Verbindung aufnehmen möchte oder aufzubauen versucht, kann das Authentifizierungskriteriums erfüllt sein.

Gemäß der Erfindung, werden zur Authentifizierung des Kraftfahrzeugs Freigabedaten durch die weitere Servereinrichtung, insbesondere über die Servereinrichtung, an das Kraftfahrzeug ausgegeben. Mit anderen Worten kann sobald das Authentifizierungskriteriums erfüllt ist, die Servereinrichtung Freigabedaten an das Kraftfahrzeug ausgeben. Hierzu kann die Servereinrichtung beispielsweise zumindest ein Identifikationsmerkmal und/oder zumindest ein Authentifizierungsmerkmal an das Kraftfahrzeug ausgeben. Gemäß der Erfindung ist es vorgesehen, dass durch die Freigabedaten eine Verbindung zwischen Kraftfahrzeug und der weiteren Servereinrichtung zum Durchführen des zumindest einen Vorgangs des Kraftfahrzeugs durch die weitere Servereinrichtung freigegeben wird. Mit anderen Worten kann dadurch eine Freigabe zum Aufbauen einer Verbindung oder zum Verbinden des Kraftfahrzeugs und der weiteren Servereinrichtung, insbesondere über eine Kommunikationsverbindung, erfolgen. Nach Empfangen der Freigabedaten des gegenüber - also des Kraftfahrzeugs und der weiteren Servereinrichtung - sind das Kraftfahrzeug und die weitere Servereinrichtung technisch in der Lage, die Verbindung, insbesondere den lokalen Kommunikationskanal, zu nutzen.

Zusätzlich kann es vorgesehen sein, dass vor Ausgabe der Freigabedaten die weitere Servereinrichtung überprüft, ob der zumindest eine Vorgang durch das Kraftfahrzeug in dem vorbestimmten Bereich durchgeführt werden kann. Mit anderen Worten kann durch die weitere Servereinrichtung eine Kommunikationsberechtigung, insbesondere bei Erfüllung des Authentifizierungskriteriums, für das Kraftfahrzeug ausgegeben werden. Nach Prüfung der Verfügbarkeit dieses Dienstes - dem Durchführen des zumindest einen Vorgangs - sowie Eignung und Erlaubnis von Kraftfahrzeug und/oder der Servereinrichtung, meldet die weitere Servereinrichtung der Servereinrichtung die Verfügbarkeit des Dienstes. Zusätzlich können der Servereinrichtung anschließend die Freigabedaten, insbesondere Identifikation- und Authentifizierungsmerkmale der weiteren Servereinrichtung, insbesondere der lokalen Kommunikationseinheit der weiteren Servereinrichtung, zur Weitergabe an das Kraftfahrzeug mitgeteilt werden. Insbesondere erfolgt dadurch eine Erlangung einer gegenseitigen Freigabe der Datenkommunikation zwischen Kraftfahrzeug und lokaler Infrastruktur über die lokale Funkverbindung.

In vorteilhafter Weise wird bei erfolgreicher Authentifizierung des Kraftfahrzeugs eine Freigabemeldung zum Koordinieren des zumindest einen Vorgangs des Kraftfahrzeugs durch die Servereinrichtung an die weitere Servereinrichtung ausgegeben. Mit anderen Worten kann die Servereinrichtung der weiteren Servereinrichtung eine Koordinationsberechtigung des Kraftfahrzeugs erteilen. Mit anderen Worten kann die Servereinrichtung daraufhin der weiteren Servereinrichtung die Berechtigung zur Koordinierung des zumindest einen Vorgangs oder der Fahrvorgänge des Kraftfahrzeugs zuweisen erteilen.

Eine weitere vorteilhafte Ausführungsform sieht vor, dass mit der Freigabemeldung ein Freigabecode an die weitere Servereinrichtung ausgegeben wird. Dafür kann als Freigabecode beispielsweise ein, insbesondere temporär beschränktes oder zeitlich beschränktes, Token der weiteren Servereinrichtung hinterlegt werden. Zusätzlich oder alternativ kann es vorgesehen sein, dass die weitere Servereinrichtung mit einer Kommunikationseinheit des vorbestimmten Bereichs gekoppelt ist, wobei die Kommunikationseinheit dazu eingerichtet ist, den zumindest einen Vorgang des Kraftfahrzeugs zu koordinieren. So kann es zusätzlich oder alternativ vorgesehen sein, dass das Token in der lokalen Kommunikationseinheit der Infrastruktur oder des vorbestimmten Bereichs gespeichert wird. Mit anderen Worten kann in der lokalen Infrastruktur ein Token für den zumindest einen Vorgangs beziehungsweise die Koordinierung des zumindest einen Vorgangs hinterlegt sein. Eine vorteilhafte Weiterbildung sieht vor, dass bei erfolgreicher Authentifizierung des Kraftfahrzeugs durch die Servereinrichtung eine weitere Freigabemeldung zur Ausführung des durch die weitere Servereinrichtung koordinierten Vorgangs ausgegeben wird. Mit anderen Worten kann die Servereinrichtung dem Kraftfahrzeug mittels der weiteren Freigabemeldung eine Berechtigung zur Ausführung von der weiteren Servereinrichtung angeforderten Koordinierung des zumindest einen Vorgangs ausgegeben oder erteilen. Mit anderen Worten kann die Servereinrichtung dem Kraftfahrzeug eine Koordinationsberechtigung erteilen. Die weitere Freigabemeldung kann beispielsweise ebenfalls in Form eines Tokens ausgegeben werden. Zusätzlich kann die Servereinrichtung hierzu im Kraftfahrzeug ein Token hinterlegen. Auf dieser Basis können iterativ beliebig viele Fahrvorgänge über den lokalen Kommunikationskanal - also die Verbindung zwischen Kraftfahrzeug und der weiteren Servereinrichtung - von der weiteren Servereinrichtung angefordert und vom Kraftfahrzeug durchgeführt werden.

In vorteilhafter Weise wird die Authentifizierung des Kraftfahrzeugs aufgehoben, sobald das Kraftfahrzeug sich von dem vorbestimmten Bereich entfernt und/oder ein manueller Fahrvorgang des Kraftfahrzeugs erfasst wird. Beim Verlassen des vorbestimmten Bereichs und/oder der Übernahme des Kraftfahrzeugs durch einen Fahrer wird beispielsweise im Kraftfahrzeug das Token zur Speicherung der Kommunikationsberechtigung vernichtet und eine Meldung an die Servereinrichtung zum Entzug der Berechtigung und nachvollziehbaren Abmeldung aus der weiteren Servereinrichtung übermittelt. Dadurch ist eine Ablehnung weiterer Koordinationsanfragen über die weitere Servereinrichtung, insbesondere den lokalen Kommunikationskanal, auch bei Verlust der Botschaft an die Servereinrichtung umgehend sichergestellt. Die Servereinrichtung entzieht daraufhin der weiteren Servereinrichtung auch die Koordinationsberechtigung. Zusätzlich oder alternativ kann die Validität des lokalen Kommunikationskanals, also der Verbindung zwischen Kraftfahrzeug und der weiteren Servereinrichtung, durch ein- oder beidseitige Vernichtung des Tokens der Kommunikationsberechtigung zurückgenommen werden. Dadurch ist ein weiterer unautorisierter Zugriff auf den Kommunikationskanal, als eine Verbindung zu der weiteren Servereinrichtung, nicht möglich.

Die Erfindung umfasst auch die Kombinationen der beschriebenen Ausführungsformen.

Die Erfindung betrifft auch ein System zur Authentifizierung eines Kraftfahrzeugs zum Durchführen zumindest eines Vorgangs durch das Kraftfahrzeug. Das System kann auch mehrere Kraftfahrzeuge umfassen. Entsprechend können auch mehrere Kraftfahrzeuge durch das System authentifiziert werden. Das System umfasst einen vorbestimmten Bereich, wobei sich der zumindest eine Vorgang des Kraftfahrzeugs auf den durch das Kraftfahrzeug befahrbaren vorbestimmten Bereich bezieht. Das Kraftfahrzeug ist dazu eingerichtet, sich an den vorbestimmten Bereich zum Durchführen des zumindest einen Vorgangs innerhalb des vorbestimmten Bereichs anzunähern. Eine Erfassungseinrichtung des Kraftfahrzeugs ist dazu eingerichtet, den vorbestimmten Bereich zu erfassen und dadurch zu identifizieren. Ferner ist das Kraftfahrzeug dazu eingerichtet, eine Identifikationsmeldung des erfassten vorbestimmten Bereichs an eine Servereinrichtung des Systems auszugeben. Die Servereinrichtung ist dazu eingerichtet, eine Anfragemeldung zur Authentifizierung des Kraftfahrzeugs auf die Identifikationsmeldung hin an eine dem vorbestimmten Bereich zugeordnete weitere Servereinrichtung des Systems auszugeben. Die weitere Servereinrichtung ist dazu eingerichtet, die Anfragemeldung zu Empfangen und ein Authentifizierungskriterium bei Empfangen der Anfragemeldung zu überprüfen, wobei bei Erfüllung des zumindest einen Authentifizierungskriteriums, die weitere Servereinrichtung das Kraftfahrzeug zum Durchführen des zumindest einen Vorgangs authentifiziert.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

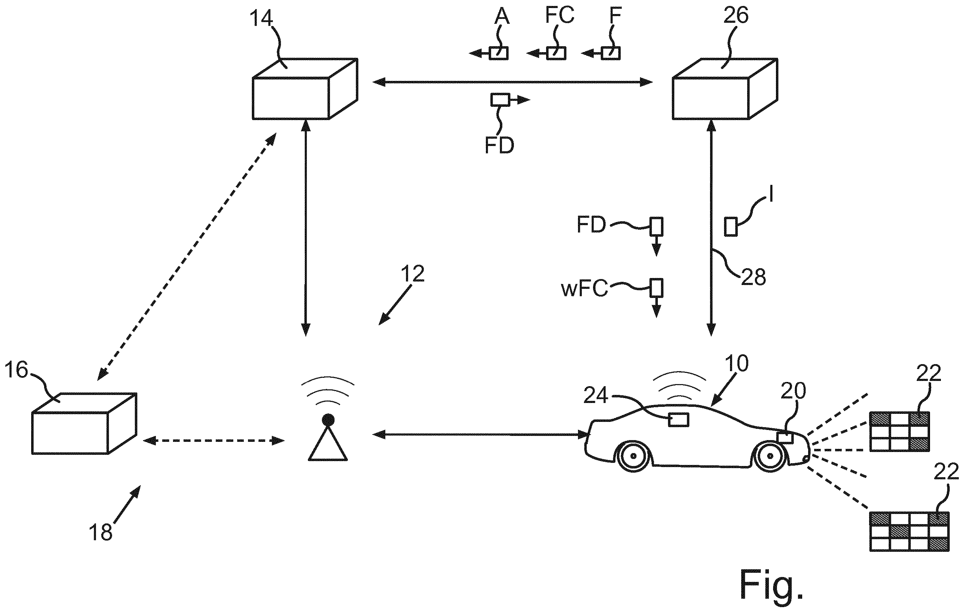

Im Folgenden ist ein Ausführungsbeispiel der Erfindung beschrieben. Hierzu zeigt die einzige Figur (Fig.) in einer schematischen Darstellung ein Verfahren zur Authentifizierung eines Kraftfahrzeugs 10. Bei dem Kraftfahrzeug 10 handelt es sich bevorzugt um einen Kraftwagen, insbesondere einen Personenkraftwagen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In dem Ausführungsbeispiel nähert sich das Kraftfahrzeug 10 einem Parkhaus (in Figur nicht dargestellt) als den vorbestimmten Bereich. In dem Parkhaus wird durch das Kraftfahrzeug 10 ein Fahrvorgang als der zumindest eine Vorgang durchgeführt. Das Kraftfahrzeug 10 kann in dem Parkhaus auch mehrere Fahrvorgänge durchführen. Dabei ist es vorgesehen, dass der Fahrvorgang durch das Kraftfahrzeug 10 autonom oder automatisch durchgeführt wird. Damit das Kraftfahrzeug 10 automatisch den Fahrvorgang durchführen kann, beispielsweise zu einer Parkposition fahren kann, kommuniziert das Kraftfahrzeug 10 über eine Funkverbindung 12 mit einer weiteren Servereinrichtung 14, welche dem Parkhaus zugeordnet ist, und/oder mit einem Server 16 des Parkhauses, also einem Kommunikationsnetz des Parkhauses, über die weitere Servereinrichtung 12. Dabei kann, wenn das Kraftfahrzeug 10 mit dem Server 16 kommuniziert, das Kraftfahrzeug 10 über eine weitere Funkverbindung 18 mit dem Server 16 kommunizieren.

Zur Vermeidung eines Missbrauchs der Kommunikation zwischen dem Kraftfahrzeug 10 und der weiteren Servereinrichtung 14 und/oder dem Server 16 wird die Funkverbindung 12 oder die weitere Funkverbindung 18 erst nach Erfüllung eines Authentifizierungskriteriums freigegeben.

Zur Erlangung dieses Authentifizierungskriteriums sind mehrere aufeinanderfolgende Schritte oder Abläufe notwendig, auf welche im Folgenden genauer eingegangen wird.

Zunächst nähert sich das Kraftfahrzeug 10 dem Parkhaus. Dabei erfasst eine Erfassungseinrichtung 20 des Kraftfahrzeugs 10 das Parkhaus. Beim Erfassen des Parkhauses kann die Erfassungseinrichtung 20 beispielsweise ein lokales Merkmal 22 oder auch mehrere Merkmale 22 des Parkhauses erfassen. Hierzu umfasst die Erfassungseinrichtung 20 einen oder mehrere Sensoren. Mit anderen Worten kann das Kraftfahrzeug 10 zum Erfassen des lokalen Merkmals 22 über eine onboard Sensorik verfügen. Zusätzlich oder alternativ ist die Erfassungseinrichtung 20 dazu eingerichtet, beim Erfassen des Parkhauses die Funkverbindung 12 zu erfassen. Um die Funkverbindung 12 zu der weiteren Servereinrichtung 14 oder die weitere Funkverbindung 18 zu dem Server 16 des Parkhauses aufzunehmen, weist das Kraftfahrzeug 10 eine Kommunikationseinrichtung 24 auf. Beispielsweise ist die Kommunikationseinrichtung 24 dazu eingerichtet, als die Funkverbindung 12 eine WLAN-Verbindung oder eine LTE-V-Verbindung aufzunehmen. Als die weitere Funkverbindung 18 kann die Kommunikationseinrichtung 24 eine Internetverbindung, wie beispielsweise eine DSL-Verbindung, oder eine WLAN-Verbindung oder eine Mobilfunkverbindung zu dem Server 16 aufnehmen.

Beim Erfassen des Merkmals des Parkhauses kann die Erfassungseinrichtung 20 beispielsweise eine Landmarke des Parkhauses erfassen. Mit "Landmarke" ist insbesondere ein sichtbares, topographisches Objekt gemeint. Beispielsweise kann die Erfassungseinrichtung 20 als eine Landmarke eine Schranke des Parkhauses oder eine Hausnummer des Parkhauses oder eine Straße, in der sich das Parkhaus befindet, erfassen. Beim Erfassen der Funkverbindung 12 kann die Erfassungseinrichtung beispielsweise einen Namen der Funkverbindung 12 erfassen.

Durch das Erfassen des Parkhauses, beispielsweise durch das Erfassen des zumindest einen lokalen Merkmals und/oder der Funkverbindung 12, kann das Parkhaus identifiziert werden. Die Identifikation kann beispielsweise durch eine Steuereinrichtung (in Figur nicht gezeigt) des Kraftfahrzeugs 10 erfolgen. Durch das Erfassen und die Identifikation des Parkhauses kann die Steuereinrichtung des Kraftfahrzeugs 10 diesen Informationen einer digitalen Karte des Parkhauses, insbesondere eine geographische oder ortsgenaue Karte, zuordnen. Hierzu kann der Steuereinrichtung oder einem Speicher des Kraftfahrzeugs 10 die digitale Karte hinterlegt sein. Um Karteninformationen, insbesondere hochgenaue Karteninformationen, der digitalen Karte des Parkhauses zu erhalten kann die Steuereinrichtung ferner dazu eingerichtet sein, Detailinformationen zu dem Parkhaus, beispielsweise von einer Servereinrichtung 26, insbesondere einer Servereinrichtung des Herstellers des Kraftfahrzeugs 10, abfragen oder nachladen.

Wie der Fig. zu entnehmen ist, ist das Kraftfahrzeug 10 mit der Servereinrichtung 26 über eine weitere Verbindung 28, insbesondere über eine weitere Funkverbindung, verbunden oder gekoppelt. Beispielsweise kann das Kraftfahrzeug 10 über eine Mobilfunkverbindung mit der Servereinrichtung 26 gekoppelt oder verbunden sein. Die Mobilfunkverbindung kann insbesondere als GPRS-Verbindung oder LTE-Verbindung ausgebildet sein. Die weitere Verbindung 28 kann durch die Kommunikationseinrichtung 24 des Kraftfahrzeugs 10 aufgenommen werden.

Sobald das Kraftfahrzeug 10 die digitale Karte identifiziert hat, wird, insbesondere durch die Kommunikationseinrichtung 24, eine Identifikationsmeldung I an die Servereinrichtung 26 über die weitere Funkverbindung 28 ausgegeben. Die Identifikationsmeldung I kann die digitale Karte und/oder das durch die Erfassungseinrichtung 20 erfasste Merkmal 22 des Parkhauses und/oder die erfasste Funkverbindung 12, wie beispielsweise den Namen der Funkverbindung, umfassen.

Daraufhin stellt die Servereinrichtung 26, welche insbesondere dem Hersteller des Kraftfahrzeugs 10 zugeordnet ist, die Identität des Kraftfahrzeugs 10 fest. Hierzu kann beispielsweise die Servereinrichtung 26 ein Kennzeichen des Kraftfahrzeugs 10 und/oder eine Kennung des Kraftfahrzeugs 10 erfassen. Zusätzlich teilt das Kraftfahrzeug 10 der Servereinrichtung 26 durch die Identifikationsmeldung I eine Anfrage zum Durchführen des zumindest einen Vorgangs, für das das Kraftfahrzeug 10 zu authentifizieren ist, mit. Daraufhin übermittelt die Servereinrichtung 26 der weiteren Servereinrichtung 14 eine Anfragemeldung A zum Durchführen des zumindest einen Vorgangs des Kraftfahrzeugs 10.

Die Servereinrichtung 26 ist zu dem dazu eingerichtet, ein Möglichkeitskriteriums auf die Anfrage des Kraftfahrzeugs 10 zu überprüfen. Hierbei prüft die Servereinrichtung 26 eine Eignung und/oder eine Erlaubnis für den angeforderten Vorgang. Beim Überprüfen des Möglichkeitskriteriums prüft die Servereinrichtung 26 beispielsweise, ob das Kraftfahrzeug 10 dazu geeignet ist, in dem Parkhaus den zumindest einen Vorgang durchzuführen und/oder überhaupt eine Zugangsberechtigung zu dem Parkhaus hat. Mit "Eignung" ist insbesondere gemein, zu überprüfen, ob das Parkhaus über technische Mittel zum Durchführen des zumindest einen Vorgangs, insbesondere zum Durchführen eines autonomen Fahrvorgangs, verfügt. Wird als der vorbestimmte Vorgang beispielsweise ein Parkvorgang angefragt und sind alle Parkplätze belegt, so kann der vorbestimmte Vorgang gar nicht durchgeführt werden. Fahrzeugseitig wird also die Identität des Kraftfahrzeugs 10 und/oder die Eignung des Kraftfahrzeugs 10 und/oder die Berechtigung des Kraftfahrzeugs 10 überprüft. Das bildet insbesondere eine Grundlage für eine Kommunikationsberechtigung des Kraftfahrzeugs 10 mit der weiteren Servereinrichtung 14.

Bei der Ausgabe der Anfragemeldung A übermittelt die Servereinrichtung 26 Daten des Kraftfahrzeugs 10, insbesondere ein Identifikationsmerkmal und/oder ein Authentifizierungsmerkmal und/oder die durch die Erfassungseinrichtung 20 des Kraftfahrzeugs 10 erfassten Daten des Parkhauses, an die weitere Servereinrichtung 14. Als Identifikationsmerkmal kann der weiteren Servereinrichtung 14 beispielsweise das Kennzeichen des Kraftfahrzeugs 10 übermittelt werden. Als Authentifizierungsmerkmal kann der weiteren Servereinrichtung beispielsweise eine Kennung des Kraftfahrzeugs 10, insbesondere zum Aufbau einer Verbindung, insbesondere Funkverbindung, wie beispielsweise eine WLAN-Verbindung, zu dem Kraftfahrzeug 10, übermittelt werden. Als Kennung kann beispielsweise ein PIN oder ein Schlüssel übermittelt werden.

Daraufhin prüft die weitere Servereinrichtung 14 das Authentifizierungskriterium. Dabei gleicht die weitere Servereinrichtung 14 die von der Servereinrichtung 26 bereitgestellten Daten, welche ein Identifikationsmerkmal und/oder ein Authentifizierungsmerkmal und/oder die durch die Erfassungseinrichtung 20 des Kraftfahrzeugs 10 erfassten Daten Parkhauses umfassen, mit dem der weiteren Servereinrichtung 14 hinterlegten und/oder der weiteren Servereinrichtung 14 durch eine Erfassungseinrichtung (in Figur nicht dargestellt) des Parkhauses erfassten Daten zur Identifikation des Kraftfahrzeugs 10, ab. Beispielsweise kann die weitere Servereinrichtung 14 als Authentifizierungskriterium das Kennzeichen des Kraftfahrzeugs 10 überprüfen, indem durch eine Erfassungseinrichtung des Parkhauses das Kennzeichen des Kraftfahrzeugs 10 erfasst und an die weitere Servereinrichtung 14 übertragen wird. Zudem wird als Identifikationsmerkmal das Kennzeichen des Kraftfahrzeugs 10 durch die Servereinrichtung 26 an die weitere Servereinrichtung 14 übertragen. Stimmen die Kennzeichen überein, so kann das Authentifizierungskriterium erfüllt sein. Zusätzlich oder alternativ kann es vorgesehen sein, dass beispielsweise die Servereinrichtung 26 ein durch die Erfassungseinrichtung 20 des Kraftfahrzeugs 10 erfasstes lokales Merkmal des Parkhauses an die Servereinrichtung 26 übermittelt. Der weiteren Servereinrichtung 14 können hierzu Merkmale des Parkhauses hinterlegt sein. Stimmt das durch die Erfassungseinrichtung 20 des Kraftfahrzeugs 10 erfasste lokale Merkmal mit einem der weiteren Servereinrichtung 14 hinterlegten Merkmale überein, so kann das Authentifizierungskriteriums erfüllt sein. Auch andere Abgleichkriterien, welche sich beispielsweise auf die Funkverbindung 12 oder das Parkhaus beziehen, sind zum Überprüfen des Authentifizierungskriteriums möglich.

Ist das Authentifizierungskriterium erfüllt, werden durch die weitere Servereinrichtung 14 Freigabedaten FD an das Kraftfahrzeug 10 über die Servereinrichtung 26 ausgegeben. Zusätzlich kann durch die weitere Servereinrichtung 14 eine Rückmeldung zur Verfügbarkeit zur Durchführung des zumindest einen Vorgangs für das Kraftfahrzeug 10 ausgegeben werden. Die Freigabedaten FD und/oder die Rückmeldung der Verfügbarkeit dienen insbesondere auf Seiten der Infrastruktur, also infrastrukturseitig beziehungsweise auf Seiten des Parkhauses, als Grundlage für eine Kommunikationsberechtigung.

Durch die Freigabedaten FD kann die weitere Servereinrichtung 14 beispielsweise zumindest ein Identifikationsmerkmal und/oder zumindest ein Authentifizierungsmerkmal der Funkverbindung 12, wie beispielsweise eine Kennung oder einen Schlüssel, an das Kraftfahrzeug 10 ausgeben. Die Freigabedaten FD können ferner zeitlich begrenzt sein.

Sobald das Kraftfahrzeug 10 die Freigabedaten FD empfangen hat, wird eine gegenseitige Freigabe der Datenkommunikation zwischen dem Kraftfahrzeug 10 und der weiteren Servereinrichtung oder dem Server 16 über die Funkverbindung 12 oder die weitere Funkverbindung 18 erlangt.

Bei erfolgreicher Authentifizierung des Kraftfahrzeugs 10 wird durch die Servereinrichtung 26 eine Freigabemeldung F zum Koordinieren des zumindest einen Vorgangs des Kraftfahrzeugs 10 an die weitere Servereinrichtung 14 ausgegeben. Durch die Freigabemeldung F erhält die weitere Servereinrichtung 14 die Berechtigung zur Koordinierung des zumindest einen Vorgangs oder der Fahrvorgänge des Kraftfahrzeugs 10.

Mit der Freigabemeldung F wird ein Freigabecode FC an die weitere Servereinrichtung 14 ausgegeben. Dafür kann als Freigabecode FC beispielsweise ein, insbesondere temporär beschränktes oder zeitlich beschränktes, Token der weiteren Servereinrichtung 14 hinterlegt werden. Zusätzlich oder alternativ kann es vorgesehen sein, dass die Koordination des Kraftfahrzeugs 10 durch den Server 16 erfolgt. So kann es zusätzlich oder alternativ vorgesehen sein, dass das Token dem Server 16 hinterlegt wird, also in der lokalen Kommunikationseinheit des Parkhauses gespeichert wird.

Bei der erfolgreichen Authentifizierung des Kraftfahrzeugs 10 wird zudem durch die Servereinrichtung 26 eine weiterer Freigabecode wFC zur Ausführung des durch die weitere Servereinrichtung 14 koordinierten Vorgangs ausgegeben. Der weitere Freigabecode wFC kann ebenfalls in Form eines Tokens ausgegeben werden. Zusätzlich kann die Servereinrichtung 26 hierzu im Kraftfahrzeug 10 den weiteren Freigabecode wFC, also das Token, hinterlegen. Zusätzlich kann es vorgesehen sein, dass durch die Servereinrichtung für jeden durch die weitere Servereinrichtung zu koordinierenden Fahrvorgang des Kraftfahrzeugs 10 weitere Freigabecodes wFCs, insbesondere jeweils insbesondere in Form von Tokens, ausgibt.

Auf dieser Basis können iterativ beliebig viele Fahrvorgänge über den lokalen Kommunikationskanal - also die Funkverbindung 12 zwischen Kraftfahrzeug 10 und der weiteren Servereinrichtung 14 oder die weitere Funkverbindung 18 zwischen dem Kraftfahrzeug 10 und dem Server 16 - von der weiteren Servereinrichtung 14 oder dem Server 16 angefordert und vom Kraftfahrzeug 10 durchgeführt werden.

Die Authentifizierung des Kraftfahrzeugs 10 wird aufgehoben, sobald das Kraftfahrzeug 10 sich von dem Parkhaus entfernt und/oder ein manueller Fahrvorgang des Kraftfahrzeugs 10 erfasst wird. Daraufhin wird der Token oder der weitere Freigabecode wFC im Kraftfahrzeug 10 gelöscht. Anschließend wird von dem Kraftfahrzeug 10 eine Meldung an die Servereinrichtung 26 ausgegeben, woraufhin die Servereinrichtung 26 eine Meldung an die weitere Servereinrichtung 14 ausgibt.

Insgesamt zeigen die Beispiele, wie durch die Erfindung ein Verfahren zur Authentifizierung von automatisierten Fahrzeugen in einer aktiven Infrastruktur bereitgestellt wird.

Gemäß einem besonders bevorzugten Ausführungsbeispiel erfolgt bei dem Verfahren ein sicherer Ablauf für eine Registrierung des Kraftfahrzeugs oder Fahrzeugs in einer zulässigen Infrastruktur, insbesondere dem Parkhaus. Dabei wird unter Verwendung der Fahrzeugsensorik, einer digitalen a-priori Karte, einer lokalen Funkverbindung und der Kommunikation mit einer Servereinrichtung, insbesondere einem Backend-Server auf Herstellerseite, und einer weiteren Servereinrichtung, insbesondere einem Backend-Server auf Servicebetreiberseite, die gegenseitige Identifikation und Authentifizierung zwischen Fahrzeug und Infrastruktur und eine abgesicherte, eindeutige Kommunikation zwischen den beteiligten Parteien etabliert. Für die Zeit der Verwaltung durch das System des Betreibers der Infrastruktur besteht eine Berechtigungszuweisung für die Anfrage von automatisierten Fahrvorgängen durch die Infrastruktur, welche nach der Übernahme durch den Fahrer zur manuellen Weiterfahrt wieder entzogen wird.

Das Fahrzeug, dass innerhalb einer dafür vorgesehenen Infrastruktur automatische Fahrvorgänge durchführen möchte, ist mit einer geeigneten Kommunikationseinheit für eine lokale Verbindung, wie zum Beispiel WLAN oder LTE-V, einer Kommunikationseinheit für eine Mobilfunkverbindung, wie zum Beispiel GPRS oder LTE, und einer Sensorik zur Erfassung seiner Umwelt ausgestattet. Über die Mobilfunkverbindung kann das Backend des Fahrzeugherstellers erreicht werden, wo Dienste zur Abwicklung von Protokollen mit dem Fahrzeug zur Verfügung stehen.

Die für automatische Fahrvorgänge vorgesehene Infrastruktur enthält ebenfalls eine Kommunikationseinheit für lokale Verbindungen und eine Internetverbindung, wie zum Beispiel DSL. Optional ist eine Ausgestaltung mit einem lokalen Server zur Koordination von automatischen Fahrvorgängen möglich. Über die Internetverbindung wird ein übergreifendes Backend des Infrastrukturbetreibers erreicht, auf dem infrastrukturspezifische Dienste, wie zum Beispiel Reservierung von Parkflächen, Bezahlung oder Einfahrtsrechte), verfügbar sind.

In dem Fahrzeug und der Infrastruktur ist eine digitale Karte der Infrastruktur verfügbar, in der wahrnehmbare Elemente und Metainformationen der Infrastruktur gespeichert sind. Über geeignete Mechanismen wird eine konsistente Informationsbasis auf beiden Seiten sichergestellt.

Die Vorgänge zur Registrierung des Fahrzeugs in der aktiven Infrastruktur folgen dabei den folgenden Schritten:
1) Einfahrt in die aktive Infrastruktur
   a. Discovery des lokalen Funkkanals durch das Fahrzeug
   b. Erkennung von lokalen Merkmalen durch die Fahrzeugsensorik

   Das Fahrzeug, das in einer Infrastruktur automatische Fahrvorgänge durchführen möchte, detektiert bei der Annäherung eine lokale Funkverbindung und sein durch onboard Sensorik wahrgenommenes Umfeld, wie zum Beispiel Landmarken.
2) Herstellen des Bezugs zwischen Detektionen, zum Beispiel Merkmale und/oder ein Funkkanal, mit Informationen aus der a-priori Karte. Zusätzlich oder alternativ kann Anfrage und Nachladen von detailliertem Kartenmaterial erfolgen.
   Durch einen Abgleich der detektierten Informationen, wie zum Beispiel einem Name der Funkverbindung oder identifizierte Landmarken, mit der digitalen Karte wird fahrzeugseitig die Zielinfrastruktur identifiziert. In einer vorteilhaften Ausprägung wird diese Information genutzt um dateneffizient weitere Detailinformationen zur entsprechenden Infrastruktur nachzuladen.
3) Meldung der Identifikation der aktiven Infrastruktur durch das Fahrzeug an Hersteller-Backend. Insbesondere übermittelt das Fahrzeug über die Mobilfunkschnittstelle die Daten zur Zielinfrastruktur an das Hersteller-Backend.
4) Prüfung der Identität des Fahrzeugs und Anfrage der Serviceparameter und Registrierung vom Hersteller-Backend an das Betreiber-Backend, insbesondere auf Seiten der Infrastruktur. Diese Meldung bildet insbesondere eine Grundlage für eine Kommunikationsberechtigung, insbesondere auf der Fahrzeugseite. Nach Sicherstellung der Identität des anfragenden Fahrzeugs, sowie Eignung und Erlaubnis für die angeforderte automatisierte Bewegung durch einen geeigneten Dienst, fragt das Hersteller-Backend die Verfügbarkeit der Infrastruktur beim Betreiber-Backend an. Dabei werden Identifikations- und Authentifizierungsmerkmale der lokalen Kommunikationseinheit des Fahrzeugs übermittelt.
5) Prüfung und Rückmeldung der Serviceverfügbarkeit für das Fahrzeug sowie Erlangung einer Grundlage für eine Kommunikationsberechtigung, insbesondere auf Infrastrukturseite. Nach Prüfung der Verfügbarkeit des Dienstes, sowie Eignung und Erlaubnis von Fahrzeug und Hersteller-Backend, meldet das Betreiber-Backend dem Hersteller-Backend die Verfügbarkeit des Dienstes zurück. Zusätzlich werden dem Hersteller-Backend Identifikations- und Authentifizierungsmerkmale der lokalen Kommunikationseinheit der Infrastruktur zur Weitergabe an das Fahrzeug mitgeteilt.
6) Erlangung gegenseitiger Freigabe der Datenkommunikation zwischen Fahrzeug und lokaler Infrastruktur über die lokale Funkverbindung, also eine gegenseitige oder bidirektionale Kommunikationsberechtigung. Nach Empfang der Identifikations- und Authentifizierungsmerkmale des Gegenüber sind Fahrzeug und Infrastruktur technisch in der Lage, den lokalen Kommunikationskanal abgesichert zu nutzen, insbesondere durch die Kommunikationsberechtigung.
7) Erteilung der Koordinationsberechtigung an den Betreiber, insbesondere den Austausch zwischen Backend-Servern, und Hinterlegung von Tokens in der lokalen Infrastruktur. Das Hersteller-Backend erteilt daraufhin dem Betreiber-Backend die Berechtigung zur Koordinierung der Fahrvorgänge des Fahrzeugs. Dafür kann sinnvollerweise ein temporär beschränktes Token im Betreiber-Backend und daraufhin in der lokalen Kommunikationseinheit der Infrastruktur gespeichert werden.
8) Erteilung der Koordinationsberechtigung an das Fahrzeug und Hinterlegung von Tokens im Fahrzeug. Das Hersteller-Backend erteilt außerdem dem Fahrzeug die Berechtigung zur Ausführung von aus der lokalen Infrastruktur angeforderten Bewegungen in Form eines Tokens. In einer vorteilhaften Ausprägung wird für Bewegungen des Fahrzeugs, zum Beispiel eine Fahrt von einer Stelle zu einer weiteren Stelle, also A nach B, eine erneute Abfrage der Berechtigung vom Hersteller-Backend zur Sicherstellung von einer Nachvollziehbarkeit und Herstellerkontrolle angefordert oder ein Token mit sehr limitierter Gültigkeit verwendet.
9) Iterative Anfrage und Durchführung von Fahrmanövern und/oder Freigabe von einzelnen Fahrvorgängen. Auf dieser Basis können iterativ beliebig viele Fahrvorgänge über den lokalen Kommunikationskanal von der Infrastruktur angefordert und vom Fahrzeug durchgeführt werden.
10) Entzug der Koordinations-/Kommunikationsberechtigung nach Übernahme des Fahrzeugs durch den Fahrer (im Fahrzeug)
   a. Löschen Tokens im Fahrzeug
   b. Meldung Fahrzeug an Hersteller-Backend
   c. Meldung Hersteller-Backend an Betreiber-Backend

Bei Verlassen der Infrastruktur und Übernahme des Fahrzeugs durch einen Fahrer oder eine andere automatisierte Fahrfunktion, wird lokal im Fahrzeug das Token zur Speicherung der Koordinationsberechtigung vernichtet und eine Meldung an das Hersteller-Backend zum Entzug der Berechtigung und nachvollziehbaren Abmeldung aus der Infrastruktur übermittelt. Dadurch ist eine Ablehnung weiterer Koordinationsanfragen über den lokalen Kommunikationskanal auch bei Verlust der Botschaft an das Hersteller-Backend umgehend sichergestellt. Das Hersteller-Backend entzieht daraufhin auch die Koordinationsberechtigung im Betreiber-Backend.
Außerdem kann auch die Validität des lokalen Kommunikationskanals durch ein- oder beidseitige Vernichtung des Tokens zur Kommunikationsberechtigung (siehe Schritt 6) zurückgenommen werden. Dadurch ist ein weiterer unautorisierter Zugriff auf den Kommunikationskanal nicht möglich.

Durch die Gestaltung des Registrierungsprozesses als mehrstufiges Verfahren bei dem stets eine unabhängige Informationsbasis auf den einzelnen Seiten von Fahrzeug und/oder Hersteller und Betreiber und/oder lokaler Infrastruktur erweitert wird, kann ein sicherer Prozess zur gegenseitigen Authentifizierung dargestellt werden.

Die Verwendung erkennbarer lokaler Elemente, welche durch das Fahrzeug lokal erfassbar sind, ermöglicht einen prüfbaren lokalen Bezug zwischen Fahrzeug und Infrastruktur.

Durch die Eingliederung des Hersteller-Backends in die Kommunikationskette ist eine zentrale Kontrolle und Nachvollziehbarkeit der Koordinationsfreigaben für Fahrzeuge gewährleistet. Dabei können trotzdem die Latenz- und Effizienzvorteile einer lokalen Verbindung trotzdem ausgeschöpft werden.

Die gesicherte Grundlage zur Koordination des Fahrzeugs durch eine externe Infrastruktur kann nicht nur eindeutig und nachvollziehbar erteilt, sondern auch entzogen werden.

## Patentansprüche

1. Verfahren zur Authentifizierung eines Kraftfahrzeugs (10) zum Durchführen zumindest eines Vorgangs durch das Kraftfahrzeug (10), wobei sich der zumindest eine Vorgang auf einen durch das Kraftfahrzeug (10) befahrbaren vorbestimmten Bereich bezieht, umfassend die Schritte:
- Annähern des Kraftfahrzeugs (10) an den vorbestimmten Bereich zum Durchführen zumindest eines Vorgangs innerhalb des vorbestimmten Bereichs;
- Erfassen des vorbestimmten Bereichs mittels einer Erfassungseinrichtung (20) des Kraftfahrzeugs (10), wodurch der vorbestimmte Bereich identifiziert wird;
- Ausgeben einer Identifikationsmeldung (I) des erfassten vorbestimmten Bereichs von dem Kraftfahrzeug (10) an eine Servereinrichtung (26);
- Ausgeben einer Anfragemeldung (A) zur Authentifizierung des Kraftfahrzeugs auf die Identifikationsmeldung (I) hin durch die Servereinrichtung (26) an eine dem vorbestimmten Bereich zugeordnete weitere Servereinrichtung (14), und
- Überprüfen eines Authentifizierungskriteriums bei Empfangen der Anfragemeldung (A) durch die weitere Servereinrichtung (14), wobei bei Erfüllung des zumindest einen Authentifizierungskriteriums das Kraftfahrzeug (10) zum Durchführen des zumindest einen Vorgangs authentifiziert wird,
**dadurch gekennzeichnet, dass** zur Authentifizierung des Kraftfahrzeugs (10) Freigabedaten (FD) durch die weitere Servereinrichtung (14), insbesondere über die Servereinrichtung (26), an das Kraftfahrzeug (10) ausgegeben werden, und dass durch die Freigabedaten (FD) eine Verbindung zwischen Kraftfahrzeug (10) und der weiteren Servereinrichtung (14) zum Durchführen des zumindest einen Vorgangs des Kraftfahrzeugs (10) durch die weitere Servereinrichtung (14) freigegeben wird.

2. Verfahren nach Anspruch 1,
**dadurch gekennzeichnet, dass**
beim Erfassen vorbestimmten Bereichs zumindest ein Merkmal (22) des vorbestimmten Bereichs durch die Erfassungseinrichtung (20) und/oder eine Funkverbindung (12) zu der weiteren Servereinrichtung (14) erfasst wird.

3. Verfahren nach Anspruch 2,
**dadurch gekennzeichnet, dass**
beim Identifizieren des vorbestimmten Bereichs dem vorbestimmten Bereich eine digitale Karte des vorbestimmten Bereichs anhand des erfassten zumindest einen Merkmals (22) und/oder der erfassten Funkverbindung (12) zugeordnet wird.

4. Verfahren nach Anspruch 3,
**dadurch gekennzeichnet, dass**
die Identifikationsmeldung (I) Kartendaten der digitalen Karte und/oder das zumindest eine Merkmal (22) des vorbestimmten Bereichs umfasst.

5. Verfahren nach einem der vorhergehenden Ansprüche,
**dadurch gekennzeichnet, dass**
die Servereinrichtung (26) vor dem Ausgeben der Anfragemeldung (A) ein Möglichkeitskriteriums zum Durchführen des zumindest einen Vorgangs durch das Kraftfahrzeug (10) prüft.

6. Verfahren nach Anspruch 5,
**dadurch gekennzeichnet, dass**
beim Prüfen des Möglichkeitskriteriums die Servereinrichtung (26) überprüft, ob das Kraftfahrzeug (10) dazu geeignet ist, in dem zumindest einem vorbestimmten Bereich den zumindest einen Vorgang durchzuführen und/oder eine Zugangsberechtigung zu dem vorbestimmten Bereich hat.

7. Verfahren nach einem der vorhergehenden Ansprüche,
**dadurch gekennzeichnet, dass**
zur Überprüfung des Authentifizierungskriteriums die weitere Servereinrichtung (14) die von der Servereinrichtung (26) bereitgestellten Daten, welche Kraftfahrzeugidentifikationsdaten und/oder die durch das Kraftfahrzeug (10) erfassten Daten des vorbestimmten Bereichs umfassen, mit den der weiteren Servereinrichtung (14) hinterlegten und/oder der weiteren Servereinrichtung (14) durch eine Erfassungseinrichtung des vorbestimmten Bereichs erfassten Daten zur Identifikation des Kraftfahrzeugs (10), abgleicht.

8. Verfahren nach Anspruch 7,
**dadurch gekennzeichnet, dass**
das Authentifizierungskriterium erfüllt ist, wenn die von der Servereinrichtung (26) bereitgestellten Daten mit den der weiteren Servereinrichtung (14) hinterlegten und/oder bereitgestellten Daten übereinstimmen.

9. Verfahren nach einem der vorhergehenden Ansprüche,
**dadurch gekennzeichnet, dass**
bei erfolgreicher Authentifizierung des Kraftfahrzeugs (10) durch die Servereinrichtung (26) eine Freigabemeldung (F) zum Koordinieren des zumindest einen Vorgangs des Kraftfahrzeugs (10) an die weitere Servereinrichtung (14) ausgegeben wird.

10. Verfahren nach Anspruch 9,
**dadurch gekennzeichnet, dass**
mit der Freigabemeldung (F) ein, insbesondere temporär begrenzter, Freigabecode (FC) an die weitere Servereinrichtung (14) ausgegeben wird.

11. Verfahren nach Anspruch 9 oder 10,
**dadurch gekennzeichnet, dass**
bei erfolgreicher Authentifizierung des Kraftfahrzeugs (10) wird durch die Servereinrichtung (26) ein weiterer Freigabecode (wFC) zur Ausführung des durch die weitere Servereinrichtung (14) koordinierten Vorgangs ausgegeben.

12. Verfahren nach einem der vorhergehenden Ansprüche,
**dadurch gekennzeichnet, dass**
die Authentifizierung des Kraftfahrzeugs (10) aufgehoben wird, sobald das Kraftfahrzeug (10) sich von dem vorbestimmten Bereich entfernt und/oder ein manueller Fahrvorgang des Kraftfahrzeugs (10) erfasst wird.

## Claims

1. Method for authenticating a motor vehicle (10) in order to perform at least one procedure by way of the motor vehicle (10), wherein the at least one procedure relates to a predetermined region able to be travelled through by the motor vehicle (10), comprising the steps of:
- the motor vehicle (10) approaching the predetermined region in order to perform at least one procedure within the predetermined region,
- capturing the predetermined region by way of a capturing apparatus (20) of the motor vehicle (10), as a result of which the predetermined region is identified,
- outputting an identification message (I) of the captured predetermined region by the motor vehicle (10) to a server apparatus (26),
- outputting a request message (A) for authenticating the motor vehicle in response to the identification message (I) by the server apparatus (26) to a further server apparatus (14) associated with the predetermined region, and
- checking an authentication criterion on receipt of the request message (A) by the further server apparatus (14), wherein, on fulfilment of the at least one authentication criterion, the motor vehicle (10) is authenticated to perform the at least one procedure, **characterised in that**, in order to authenticate the motor vehicle (10), authorisation data (FD) is output by the further server apparatus (14), in particular via the server apparatus (26), to the motor vehicle (10), and that, by means of the authorisation data (FD), a link between the motor vehicle (10) and the further server apparatus (14) for performing the at least one procedure of the motor vehicle (10) is authorised by the further server apparatus (14).

2. Method according to claim 1,
**characterised in that**,
when capturing the predetermined region, at least one characteristic (22) of the predetermined region and/or a radio link (12) to the further server apparatus (14) is captured by the capturing apparatus (20).

3. Method according to claim 2,
**characterised in that**,
when identifying the predetermined region, the predetermined region is associated with a digital map of the predetermined region by means of the captured at least one characteristic (22) and/or the captured radio link (12).

4. Method according to claim 3,
**characterised in that**
the identification message (I) comprises map data for the digital map and/or the at least one characteristic (22) of the predetermined region.

5. Method according to any of the preceding claims,
**characterised in that**,
before outputting the request message (A), the server apparatus (26) checks a possibility criterion for performing the at least one procedure by way of the motor vehicle (10).

6. Method according to claim 5,
**characterised in that**,
when checking the possibility criterion, the server apparatus (26) checks whether the motor vehicle (10) is capable of performing the at least one procedure in the at least one predetermined region and/or has an access authorisation for the predetermined region.

7. Method according to any of the preceding claims,
**characterised in that**,
in order to check the authentication criterion, the further server apparatus (14) compares the data provided by the server apparatus (26), which comprises motor vehicle identification data and/or the data captured by the motor vehicle (10) for the predetermined region, with the data stored by the further server apparatus (14) and/or the data captured for the further server apparatus (14) by a capturing apparatus of the predetermined region for identification of the motor vehicle (10).

8. Method according to claim 7,
**characterised in that**
the authentication criterion is fulfilled when the data provided by the server apparatus (26) corresponds with the data stored and/or provided by the further server apparatus (14).

9. Method according to any of the preceding claims,
**characterised in that**,
on successful authentication of the motor vehicle (10) by the server apparatus (26), an authorisation message (F) for coordinating the at least one procedure of the motor vehicle (10) is output to the further server apparatus (14).

10. Method according to claim 9,
**characterised in that**,
with the authorisation message (F) an, in particular, temporarily limited, authorisation code (FC) is output to the further server apparatus (14).

11. Method according to claim 9 or 10,
**characterised in that**,
on successful authentication of the motor vehicle (10), a further authorisation code (wFC) for implementing the procedure coordinated by the further server apparatus (14) is output by the server apparatus (26).

12. Method according to any of the preceding claims,
**characterised in that**
the authentication of the motor vehicle (10) is cancelled as soon as the motor vehicle (10) leaves the predetermined region and/or a manual driving procedure of the motor vehicle (10) is captured.

## Revendications

1. Procédé d'authentification d'un véhicule automobile (10) en vue de l'exécution d'au moins un processus par le véhicule automobile (10), selon lequel le au moins un processus concerne une zone prédéterminée praticable par le véhicule automobile (10), comprenant les étapes :
- d'approche du véhicule automobile (10) de la zone prédéterminée en vue d'exécuter au moins un processus à l'intérieur de la zone prédéterminée ;
- de détection de la zone prédéterminée au moyen d'un dispositif de détection (20) du véhicule automobile (10), par quoi la zone prédéterminée est identifiée ;
- de délivrance d'une notification d'identification (I) de la zone prédéterminée détectée par le véhicule automobile (10) à un dispositif serveur (26) ;
- de délivrance d'une notification de demande (A), en vue de l'authentification du véhicule automobile, en ce qui concerne la notification d'identification (I), par le dispositif serveur (26) à un autre dispositif serveur (14) associé à la zone prédéterminée, et
- d'examen d'un critère d'authentification à la réception de la notification de demande (A) par l'autre dispositif serveur (14), selon lequel en cas de satisfaction du au moins un critère d'authentification, le véhicule automobile (10) est authentifié pour exécuter le au moins un processus,
**caractérisé en ce que**, en vue de l'authentification du véhicule automobile (10), des données d'autorisation (FD) sont délivrées par l'autre dispositif serveur (14), en particulier par l'intermédiaire du dispositif serveur (26), au véhicule automobile (10), et **en ce que**, par les données d'autorisation (FD), une liaison entre le véhicule automobile (10) et l'autre dispositif serveur (14) est autorisée par l'autre dispositif serveur (14) pour exécuter le au moins un processus du véhicule automobile (10).

2. Procédé selon la revendication 1,
**caractérisé en ce que**,
lors de la détection d'une zone prédéterminée, est détectée au moins une caractéristique (22) de la zone prédéterminée par le dispositif de détection (20) et/ou une liaison radio (12) avec l'autre dispositif serveur (14).

3. Procédé selon la revendication 2,
**caractérisé en ce que**,
lors d'une identification de la zone prédéterminée, une carte numérique de la zone prédéterminée est associée à la zone prédéterminée à l'aide de la au moins une caractéristique (22) détectée et/ou de la liaison radio (12) détectée.

4. Procédé selon la revendication 3,
**caractérisé en ce que**
la notification d'identification (I) comprend des données de carte de la carte numérique et/ou la au moins une caractéristique (22) de la zone prédéterminée.

5. Procédé selon l'une des revendications précédentes,
**caractérisé en ce que**
le dispositif serveur (26) examine, avant la délivrance de la notification de demande (A), un critère de possibilité en vue de l'exécution du au moins un processus par le véhicule automobile (10).

6. Procédé selon la revendication 5,
**caractérisé en ce que**,
lors de l'examen du critère de possibilité, le dispositif serveur (26) examine si le véhicule automobile (10) est approprié pour exécuter, dans la au moins une zone prédéterminée, le au moins un processus, et/ou possède une autorisation d'accès à la zone prédéterminée.

7. Procédé selon l'une des revendications précédentes,
**caractérisé en ce que**,
pour examiner le critère d'authentification, l'autre dispositif serveur (14) recoupe les données mises à disposition par le dispositif serveur (26), lesquelles comprennent des données d'identification de véhicule automobile et/ou les données de la zone prédéterminée détectées par le véhicule automobile (10), avec les données fournies à l'autre dispositif serveur (14) et/ou détectées par un dispositif de détection de la zone prédéterminée pour l'autre dispositif serveur (14), en vue de l'identification du véhicule automobile (10).

8. Procédé selon la revendication 7,
**caractérisé en ce que**
le critère d'authentification est satisfait si les données mises à disposition par le dispositif serveur (26) correspondent aux données fournies à et/ou mises à la disposition de l'autre dispositif serveur (14).

9. Procédé selon l'une des revendications précédentes,
**caractérisé en ce que**,
en cas d'authentification réussie du véhicule automobile (10), une notification d'autorisation (F) est délivrée par le dispositif serveur (26) à l'autre dispositif serveur (14), en vue de coordonner le au moins un processus du véhicule automobile (10).

10. Procédé selon la revendication 9,
**caractérisé en ce qu'**
avec la notification d'autorisation (F), un code d'autorisation (FC), en particulier limité dans le temps, est délivré à l'autre dispositif serveur (14).

11. Procédé selon la revendication 9 ou 10,
**caractérisé en ce que**,
en cas d'authentification réussie du véhicule automobile (10), un autre code d'autorisation (wFC) est délivré par le dispositif serveur (26) en vue de l'exécution du processus coordonné par l'autre dispositif serveur (14).

12. Procédé selon l'une des revendications précédentes,
**caractérisé en ce que**
l'authentification du véhicule automobile (10) est annulée dès que le véhicule automobile (10) s'éloigne de la zone prédéterminée et/ou qu'un processus de déplacement manuel du véhicule automobile (10) est détecté.
